# EUROPEAN PATENT SPECIFICATION

(11) **EP 1 597 417 B1**
(45) Date of publication and mention of the grant of the patent: **03.03.2010**
(21) Application number: 03815978.6
(22) Date of filing: 23.07.2003
(51) Int. Cl.: D01D 5/00

(54) **A PROCESS OF PREPARING CONTINUOUS FILAMENT COMPOSED OF NANO FIBER**
VERFAHREN ZUR HERSTELLUNG EINES ENDLOSFILAMENTS AUS NANOFASER
PROCEDE DE PREPARATION D'UN FILAMENT CONTINU COMPOSE DE NANOFIBRES

(30) Priority: 24.02.2003 KR 2003011296
(43) Date of publication of application: 23.11.2005
(73) Proprietor: Kim, Hag-Yong, Jeonju-si, 560-865 Jeollabuk-do (KR); Park, Jong-Cheol, Ichon-dong, Yongsan-gu Seoul, 140-030 (KR)
(72) Inventor: KIM, Hag-Yong, Jeonju-si, Jeollabuk-do 560-865 (KR); GIL, Myung-Seop, 103-1601 Hangang APT, Jeonju-si, Jeollabuk-do 560-858 (KR); JUNG, Yoon-Ho, 108-403 Sangsan-twon, Jeonju-si, Jeollabuk-do 560-240 (KR); KIM, Hyung-Jun, 110-1701 Woosung APT, Jeonju-si, Jeollabuk-do 561-783 (KR); LEE, Bong-Seok, 202 Samyounghwasin, Gochang-gun, Jeollabuk-do 585-808 (KR)
(74) Representative: Merkle, Gebhard
(86) International application number: PCT/KR2003/001460
(87) International publication number: WO 2004/074559

(56) References cited:
- JP-A- 3 161 502
- KR-A- 20020 051 066
- KR-A- 20030 003 925
- US-A1- 2002 122 840
- US-A1- 2002 175 449
- KHIL M S ET AL: "Novel Fabricated Matrix Via Electrospinning for Tissue Engineering" JOURNAL OF BIOMEDICAL MATERIALS RESEARCH PART B: APPLIED BIOMATERIALS, vol. 72, 27 August 2004 (2004-08-27), pages 117-124, XP002430455

## Description

### TECHNICAL FIELD

The present invention relates to a process of preparing a continuous filament or yarn (hereinafter, commonly referred to as a "filament") composed of a nano fiber, and more particularly, to a process of preparing a continuous filament composed of a nano fiber using an electrospinning method.

In the present invention, the nano fiber designates a fiber having a fiber diameter less than 1,000 nm, more preferably, less than 500nm.

A woven fabric composed of a nano fiber can be utilized for an artificial leather, filter, diaper, sanitary pad, suture, antisetting agent, wiping cloth, artificial vessel, bone fixing device and the like, particularly, it is very useful for the production of the artificial leather.

### BACKGROUND ART

As conventional techniques for preparing an ultra fine fiber or nano fiber suitable for the production of an artificial leather, there are known a sea-island type conjugated spinning method, a split type conjugated spinning method, a blend spinning method and so on.

However, in case of the sea-island type conjugated spinning method or the blend spinning method, one of two polymer components consisting a fiber must be dissolved and removed for making the ultra fine fiber. In order to produce an artificial leather from the fiber prepared by these methods, a complex process must be carried out, including melt spinning, fiber production, non-woven fabric production, urethane impregnation and single component dissolution.

Nevertheless, it was impossible to produce a fiber with a diameter less than 1,000 nm by the above two methods.

In case of the spit type conjugate spinning method, it was problematic in that since two polymer components (for example, polyester and polyamide) with different dyeing properties co-exist in a fiber, uneven dyeing is shown and an artificial leather production process is complicated. In addition, it was difficult to produce a fiber with a diameter less than 2,000 nm by the above method.

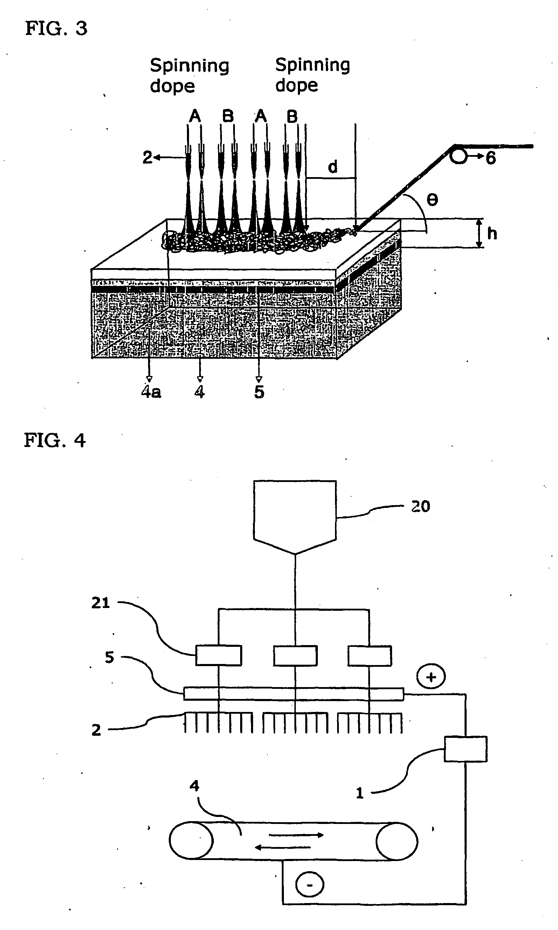

Another conventional technique for preparing a nano fiber, an electrospinning method is suggested. In the electrospinning method, as shown in fig. 4, a polymer spinning dope in a spinning dope main tank (20) is continuously and constantly fed into a plurality of nozzles (2), which has a high voltage applied, through a metering pump (21). Subsequently, the spinning dope fed to the nozzles (2) is spun and collected through the nozzles (2) on a collector (4) of an endless belt type having a high voltage more than 5 kV, thereby producing a fiber web. The fiber web produced is needle-punched in the next process to produce a non-woven fabric composed of a nano fiber.

As seen from above, the conventional electrospinning method can produce only a web or non-woven fabric composed of a nano fiber less than 1,000 nm. Hence, to prepare a continuous filament by the conventional electrospinning method, the produced nano fiber web has to be cut to a predetermined length to produce a staple and this staple has to be undergone an additional spinning process to produce spun yarn, which makes the process complicated.

In case of the non-woven fabric composed of a nano fiber, there is a limitation to employing the non-woven fabric to various fields of application, such as the artificial leather, due to the limits in the physical properties of the non-woven fabric. For reference, it is difficult to achieve physical properties of more than 10 MPa from the non-woven fabric composed of a nano fiber.

The present invention is intended to prepare a continuous filament composed of a nano fiber with a simple procedure by providing a process of continuously preparing a filament (yarn) using an electrically spun nano fiber web without any additional spinning process. Additionally, the present invention is intended to provide a continuous filament of a nano fiber which is superior in physical properties and is suitable for various industrial materials, such as a filter, diaper, sanitary pad, artificial vessel and so on as well as artificial leather.

### DISCLOSURE OF INVENTION

The present invention has been developed for the purpose of solving the foregoing problems and thus it is an object of the present invention to provide a process of preparing a continuous filament composed of a nano fiber, wherein nano fibers are prepared by spinning a polymer spinning dope in a spinning dope main tank (20) onto the surface of water or organic solvent (4a) of a collector (4), which contains water or organic solvent (4a) and has a conductive material (5) with a high voltage applied sunken in the water or organic solvent (4a), through nozzles (2) with a high voltage applied, and the nano fibers are pressed, drawn, dried and wound while being pulled by a rotary roller (6) rotating at a constant linear velocity from the location spaced more than 1cm from one end of a dropping spot.

Hereinafter, the present invention will be described in detail with reference to the accompanying drawings.

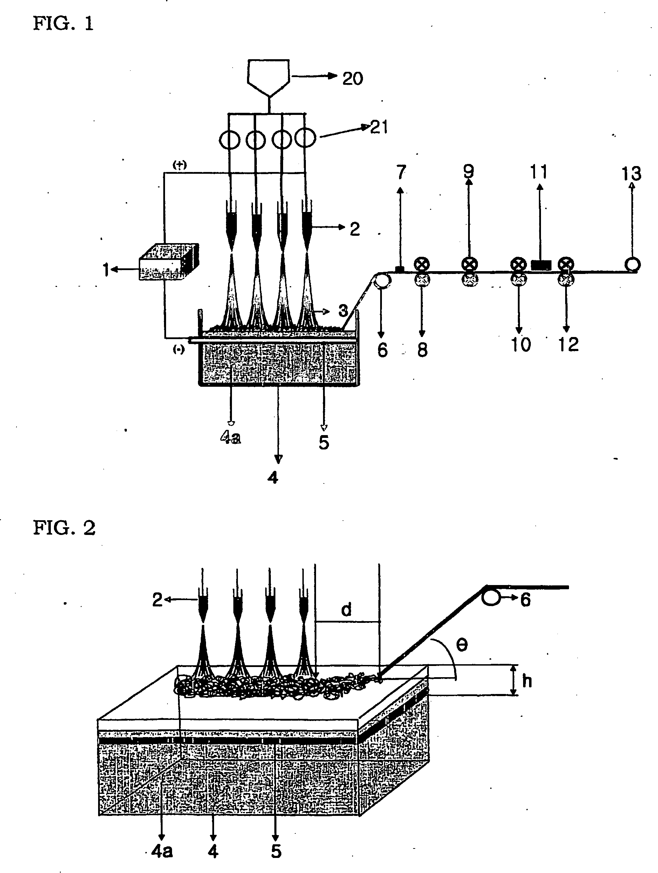

Fig. 1 is a schematic view showing a process of the presents invention.

Firstly, in the present invention, as shown in fig. 1, a polymer spinning dope in a spinning dope main tank (20) is constantly fed into a plurality of nozzles (2) through a metering pump (21). The nozzles (2) have a high voltage more than 5 kV applied by a voltage generator (1).

Next, the constantly fed polymer spinning dope through the plurality of nozzles (2) is electrically spun onto the surface of water or organic solvent (4a) in a collector (4) specifically manufactured in the present invention, to thereby collect a nano fiber.

The collector (4) is a container containing water or organic solvent (4a) and has such a construction that a conductive material (5) having a high voltage more than 5 kV applied by the voltage generator (1) is installed, being sunken in the water or organic solvent (4a) in the container.

The conductive material (5) is a metal plate or metal powder. The distance (h) from the surface of water or organic solvent (4a) contained in the collector (4) to the top surface of the conductive material (5) is 0.01 to 200 mm, more preferably, 5 to 50 mm.

If the distance (h) is too short, the spun nano fiber is directly contacted with the surface of the conductive material (5) and thereafter is not pulled well by a rotary roller (6), thereby making the process difficult. If the distance (h) is too long, the voltage applied to the conductive material (5) is not transferred well to the surface of water or organic solvent, thereby making a collected state of the nano fiber poor.

The diameter of the spun nano fiber is less than 1,000 nm, more preferably, less than 500 nm.

Next, the nano fibers spun and collected on the surface of water or organic solvent (4a) contained in the collector (4) are continuously pulled by the rotary roller (6) to thus form an undrawn filament (aggregate of nano fibers).

Whereupon, the angle (θ) between the nano fibers spun and collected on the surface of water or organic solvent (4a) in the collector (4) and the undrawn filament (aggregate of nano fibers) pulled by the rotary roller (6) is 0 to 180°C, more preferably, 10 to 90°C.

The distance (d) from one end of a dropping spot of the nano fibers to the initial point where the nano fibers are pulled by the rotary roller (6) is more than 1 cm. If the distance (d) is less than 1 cm, the spun nano fibers are pulled in a state that it is not sufficiently coagulated, thereby making the production of a continuous filament difficult.

Next, the undrawn filament (aggregate of nano fibers) pulled by the rotary roller (6) is pressed by a press roller (9) to remove the residual water or organic solvent in the aggregate, then dried by a drier (11) as being drawn between drawing rollers (8, 10 and 12) and then are wound by a winding roller (13). The drawn filament may be twisted by a twister before it is wound.

In this invention, an electric spinning process, a process of pulling nano fibers, a pressing process, a drawing process and a drying process are continuously carried out.

The polymer spinning dope of this invention is composed of polyester resin, nylon resin, polysulfon resin, polylactic acid, a copolymer thereof or a mixture thereof.

As shown in fig. 3, the present invention also includes a method of preparing a filament composed of a hybrid nano fiber by spinning more than two kinds of polymer spinning dope to the surface of water or organic solvent (4a) contained in the same collector (4) through each of nozzles (2).

Additionally, the present invention also includes a method of preparing a filament composed of a hybrid nano fiber by spinning two kinds of polymer spinning dope by a respective nozzle (2) and a respective collector (4) of this invention and then blending the spun nano fibers of two kinds by pulling them by the same rotary roller (6).

Additionally, the present invention also includes a method of preparing a filament composed of a hybrid nano fiber by twisting two kinds of filaments separately spun, drawn and wound according to the method of the present invention.

### BRIEF DESCRIPTION OF THE DRAWINGS

These and other features, aspects, and advantages of preferred embodiments of the present invention will be more fully described in the following detailed description, taken accompanying drawings. In the drawings:
Fig. 1 is a schematic view showing a process of the present invention;
Fig. 2 is an enlarged view of a collector used in the present' invention;
Fig. 3 is a schematic view showing a process of spinning two kinds of polymer spinning dopes onto one collector;
Fig. 4 is a schematic view showing a process of a conventional electrospinning method for preparing a nano fiber web;
Fig. 5 is a scanning electron micrograph of a surface of an undrawn filament (aggregate of nano fibers) prepared according to Example 1; and
Fig. 6 is a scanning electron micrograph of a surface of an undrawn filament (aggregate of nano fibers) prepared according to Example 5.

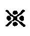 Explanation of reference numerals for main components in the drawings.
1: voltage generator 2: nozzle (spinneret)
3: spun nano fiber 4: collector
4a: water or organic solvent in collector
5: conductive material 6: rotary roller
7: tension controller 8: press roller
9, 10, 12: drawing roller 11: drier
13: winder 20: spinning dope main tank
21: metering pump
h: distance from surface of water or organic solvent to top surface of conductive material
d: distance from one end of dropping spot to initial point where nano fibers are pulled
θ: angle between nano fibers on surface of water or organic solvent and undrawn filament pulled by rotary roller

### BEST MODES FOR CARRYING OUT THE INVENTION

Hereinafter, the present invention will be described in detail with reference to examples. But, this invention is not limited to the following examples.

### EXAMPLE 1

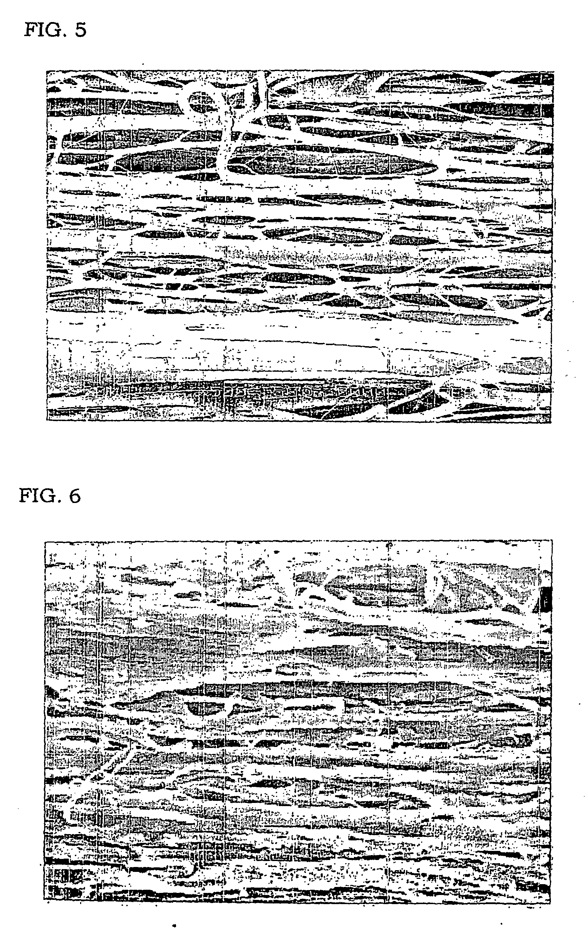

A polymer spinning dope was prepared by dissolving a poly(ε-caprolactone) polymer (purchased from Aldrich Chemical Company) having a number average molecular weight of 80,000 in a mixed solvent of methylene chloride/N, N'-dimethyl form amide (volume ratio: 75/25) at a concentration of 13% by weight. The polymer spinning dope had a surface tension of 35 mN/m, a solution viscosity of 35 centipoise at an ambient temperature, an electric conductivity of 0.02 mS/m and a permittivity constant of 90. The polymer spinning dope was constantly fed to 15 nozzles (2) with a 1 mm diameter and a 25 kV voltage applied through a metering pump (21). Then, as shown in fig. 1, the polymer spinning dope was electrically spun onto a collector (4) of this invention, which contains water (4a) and has a conductive material (5) of a copper plate with a 25 kV voltage and a 10mm thickness sunken in the water (4a), more concretely, onto the surface of water contained in the collector (4). The distance (h) from the surface of water to the top surface of the conductive material (5) was 1 cm. Continually, nano fibers spun and agglomerated on the surface of water contained in the container (4) were pulled by a rotary roller (6) with a linear velocity of 36 m/min to thus prepare an undrawn filament (aggregate of nano fibers). The angle (θ) between the nano fibers located on the water surface and the undrawn filament (aggregate of nano fibers) pulled by the rotary roller (6) was 30°. The distance (d) from one end of a dropping spot of the nano fibers to the initial point where the nano fibers are pulled by the rotary roller (6) was 5cm. The thusly prepared undrawn filament (aggregate of nano fibers) had a fineness of 108 deniers, a strength of 0.22 g/d and an elongation of 106%, and an electron micrograph of the surface thereof is as shown in fig. 5. Continually, the undrawn filament (aggregate of nano fibers) having passed through the rotary roller was pressed by a press roller (9), dried by a drier (11) while being drawn by drawing rollers (8, 10 and 12) so that the total draw ratio becomes 1.4 and then wound by a winding roller (13), thereby preparing a continuous filament composed of a nano fiber. The finally prepared continuous filament (composed of a nano fiber and drawn) had a strength of 1.4 g/d and an elongation of 35%.

### EXAMPLE 2

A polymer spinning dope was prepared by dissolving a nylon-6 resin, which has a relative viscosity of 3.2 in a 96% sulfuric acid solution, in a form acid at a concentration of 15% by weight. The polymer spinning dope had a surface tension of 49 mN/m, a solution viscosity of 40 centipoise at an ambient temperature and an electric conductivity of 420 mS/m. The polymer spinning dope was constantly fed to 15 nozzles (2) with a 1mm diameter and a 30 kV voltage applied through a metering pump (21). Then, as shown in fig. 1, the polymer spinning dope was electrically spun onto a collector (4) of this invention, which contains water (4a) and having a conductive material (5) of a copper plate with a 30 kV voltage and a 20 mm thickness sunken in the water (4a), more concretely, onto the surface of water contained in the collector (4). The distance (h) from the surface of water to the top surface of the conductive material (5) was 1 cm. Continually, nano fibers spun and agglomerated on the surface of water were pulled by a rotary roller (6) with a linear velocity of 30 m/min to thus prepare an undrawn filament (aggregate of nano fibers). The angle (θ) between the nano fibers located on the water surface and the undrawn filament (aggregate of nano fibers) pulled by the rotary roller (6) was 40°. The distance (d) from one end of a dropping spot of the nano fibers to the initial point where the nano fibers are pulled by the rotary roller (6) was 8 cm. The prepared undrawn filament (aggregate of nano fibers) had a fineness of 110 deniers, a strength of 0.56g/d and an elongation of 205%. Continually, the undrawn filament (aggregate of nano fibers) having passed through the rotary roller was pressed by a press roller (9), dried by a drier (11) while being drawn by drawing rollers (8, 10 and 12) so that the total draw ratio becomes 2.8 and then wound by a winding roller (13), thereby preparing a continuous filament composed of a nano fiber. The finally prepared continuous filament (composed of a nano fiber and drawn) had a strength of 2.8 g/d and an elongation of 35%.

### EXAMPLE 3

A polyester spinning dope (hereinafter, referred to as a "spinning dope B) was prepared by dissolving a polyester resin with an intrinsic viscosity of 0.64 in a mixed solvent of trifluoro acetic acid/methylene chloride (volume ratio: 50/50) at a concentration of 15% by weight. The nylon-6 spinning dope (hereinafter, referred to as a "spinning dope A") of Example 2 and the spinning dope B were constantly fed to 15 nozzles (2) with a 1mm diameter and a 25 kV voltage applied alternately through a metering pump (21). Then, as shown in fig. 1, the spinning dope A and the spinning dope B were electrically spun onto a collector (4) of this invention, which contains water (4a) and has a conductive material (5) of a copper plate with a 25 kV voltage and a 10 mm thickness sunken in the water (4a), more concretely, onto the surface of water contained in the collector (4). The distance (h) from the surface of water to the top surface of the conductive material (5) was 1 cm. Continually, nano fibers spun and agglomerated on the surface of water were pulled by a rotary roller (6) with a linear velocity of 20 m/min to thus prepare a hybrid undrawn filament (aggregate of nano fibers). The angle (θ) between the nano fibers located on the water surface and the hybrid undrawn filament (aggregate of nano fibers) pulled by the rotary roller (6) was 30°. The distance (d) from one end of a dropping spot of the nano fibers to the initial point where the nano fibers are pulled by the rotary roller (6) was 5 cm. Continually, the undrawn filament (aggregate of nano fibers) having passed through the rotary roller was pressed by a press roller (9), dried by a drier (11) while being drawn by drawing rollers (8, 10 and 12) so that the total draw ratio becomes 3.0 and then wound by a winding roller (13), thereby preparing a continuous filament composed of a hybrid nano fiber. The finally prepared continuous filament (composed of a nano fiber and drawn) had a strength of 2.7 g/d and an elongation of 46%.

### EXAMPLE 4

A polymer spinning dope was prepared by dissolving a polyvinyl alcohol (purchased from Celanese) having a number average molecular weight of 65,000 and a viscosity of 96% in a 80°C distilled water at a concentration of 10% by weight and adding phosphoric acid therein so that the polyvinyl alcohol has a pH 2.5. The polymer spinning dope was constantly fed to 15 nozzles (2) with a 1mm diameter and a 20 kV voltage applied through a metering pump (21). Then, as shown in fig. 1, the polymer spinning dope was electrically spun onto a collector (4) of this invention, which contains ethanol (4a) and having a conductive material (5) of a copper plate witch a 20 kV voltage and a 20 mm thickness sunken in the ethanol (4a), more concretely, onto the surface of ethanol contained in the collector (4). The distance (h) from the surface of ethanol to the top surface of the conductive material (5) was 1 cm. Continually, nano fibers spun and agglomerated on the surface of ethanol were pulled by a rotary roller (6) with a linear velocity of 30 m/min to thus prepare an undrawn filament (aggregate of nano fibers). The angle (θ) between the nano fibers located on the ethanol surface and the undrawn filament (aggregate of nano fibers) pulled by the rotary roller (6) was 30°. The distance (d) from one end of a dropping spot of the nano fibers to the initial point where the nano fibers are pulled by the rotary roller (6) was 10 cm. Continually, the undrawn filament (aggregate of nano fibers) having passed through the rotary roller was pressed by a press roller (9), dried by a drier (11) while being drawn by drawing rollers (8, 10 and 12) so that the total draw ratio becomes 2.0 and then wound by a winding roller (13), thereby preparing a continuous filament composed of a nano fiber. The finally prepared continuous filament (composed of a nano fiber and drawn) had a strength of 1.5 g/d and an elongation of 45%. The average diameter of the nano fiber was 250 nm.

### EXAMPLE 5

A polymer spinning dope was prepared by dissolving a polyurethane resin having a molecular weight of 80,000 in a mixed solvent of dimethyl formamide/tetrahydrofuran (volume ratio: 5/5) at a concentration of 13.5% by weight. The polymer spinning dope was constantly fed to 15 nozzles (2) with a 1mm diameter and a 30 kV voltage applied through a metering pump (21). Then, as shown in fig. 1, the polymer spinning dope was electrically spun onto a collector (4) of this invention, which contains water (4a) and having a conductive material (5) of a copper plate with a 30 kV voltage and a 10mm thickness sunken in the water (4a), more concretely, onto the surface of water contained in the collector (4). The distance (h) from the surface of water to the top surface of the conductive material (5) was 1.5 cm. Continually, nano fibers spun and agglomerated on the surface of water were pulled by a rotary roller (6) with a linear velocity of 36 m/min to thus prepare an undrawn filament (aggregate of nano fibers). The angle (θ) between the nano fibers located on the water surface and the undrawn filament (aggregate of nano fibers) pulled by the rotary roller (6) was 30°. The distance (d) from one end of a dropping spot of the nano fibers to the initial point where the nano fibers are pulled by the rotary roller (6) was 10 cm. The thusly prepared undrawn filament (aggregate of nano fibers) had a fineness of 63.5 deniers, a strength of 0.5 g/d and an elongation of 106%, and an electron micrograph of the surface thereof is as shown in fig. 6. Continually, the undrawn filament (aggregate of nano fibers) having passed through the rotary roller was pressed by a press roller (9), dried by a drier (11) while being drawn by drawing rollers (8, 10 and 12) so that the total draw ratio becomes 1.4 and then wound by a winding roller (13), thereby preparing a continuous filament composed of a nano fiber. The finally prepared continuous filament (composed of a nano fiber and drawn) had a strength of 1.2 g/d and an elongation of 80%.

### INDUSTRIAL APPLICABILITY

The present invention can prepare a continuous filament composed of a nano fiber by a simpler continuous procedure. The continuous filament prepared according to the present invention is greatly improved in physical properties, thus it is useful as materials of various industrial fields, such as an artificial dialyzing filter, artificial vessel, anti-adhesion agent, artificial bone and so on, as well as daily necessaries, such as an artificial leather, air cleaning filter, wiping cloth, golf glove, wig and so on.

## Claims

1. A process of preparing a continuous filament composed of a nano fiber,
wherein nano fibers are prepared by spinning a polymer spinning dope in a spinning dope main tank (20) onto the surface of water or organic solvent (4a) of a collector (4), which contains water or organic solvent (4a) and has a conductive material (5) with a high voltage applied sunken in the water or organic solvent (4a), through nozzles (2) with a high voltage applied, and
the nano fibers spun onto the surface of water or organic solvents (4a) are pressed, drawn, dried and wound while being pulled by a rotary roller (6) rotating at a constant linear velocity from the location spaced more than 1cm from one end of a dropping spot.

2. The process of claim 1, wherein the conductive material (5) is a metal plate or metal powder.

3. The process of claim 1, wherein the distance (h) from the surface of water or organic solvent (4a) contained in the collector (4) to the top surface of the conductive material (5) is 0.01 to 200 mm.

4. The process of claim 1, wherein the distance (h) from the surface of water or organic solvent (4a) contained in the collector (4) to the top surface of the conductive material (5) is 5 to 50 mm.

5. The process of claim 1, wherein the angle(θ) between the nano fibers collected on the surface of water or organic solvent (4a) in the collector (4) and the undrawn filament (aggregate of nano fibers) pulled by the rotary roller (6) is 0 to 180°.

6. The process of claim 1, wherein the angle(θ) between the nano fibers collected on the surface of water or organic solvent (4a) in the collector (4) and the undrawn filament (aggregate of nano fibers) pulled by the rotary roller (6) is 10 to 90°.

7. The process of claim 1, wherein the drawn filament (yarn) is twisted before being wound.

8. The process of claim 1, wherein the diameter of the nano fibers is less than 1,000 nm.

9. The process of claim 1, wherein the polymer spinning dope is composed of polyester resin, nylon resin, polysulfon resin, poly lactic acid and a copolymer thereof or a mixture thereof.

10. The process of claim 1, wherein more than two kinds of the polymer spinning dope are spun onto the surface of water of organic solvent (4a) of the collector (4), which contains water or organic solvent (4a) and has the conductive material (5) with a high voltage applied sunken in the water or organic solvent (4a), through each of the nozzles (2).

## Patentansprüche

1. Verfahren zur Herstellung eines Endlosfilaments, aufgebaut aus einer Nanofaser,
wobei Nanofasern durch Verspinnen einer Polymerspinnlösung in einem Spinnlösungshauptbehälter (20) auf der Oberfläche von Wasser oder einem organischen Lösungsmittel (4a) eines Kollektors (4), der Wasser oder organisches Lösungsmittel (4a) enthält und ein leitendes Material (5) mit einer angelegten Hochspannung, versenkt in Wasser oder in organischem Lösungsmittel (4a), aufweist, durch Düsen (2) mit einer angelegten Hochspannung hergestellt werden, und
die auf der Oberfläche von Wasser oder einem organischen Lösungsmittel (4a) versponnenen Nanofasern gepresst, gezogen, getrocknet und gewickelt werden, während sie von einer rotierbaren Walze (6), die mit einer konstanten Lineargeschwindigkeit rotiert, von einer von einem Ende der Tropfstelle über 1 cm entfernt beabstandeten Position gezogen werden.

2. Verfahren nach Anspruch 1, wobei das leitende Material (5) eine Metallplatte oder ein Metallpulver darstellt.

3. Verfahren nach Anspruch 1, wobei die Entfernung (h) zwischen der Oberfläche von in dem Kollektor (4) enthaltenem Wasser oder organischen Lösungsmittel (4a) und der Oberseite des leitenden Materials (5) 0,01 bis 200 mm beträgt.

4. Verfahren nach Anspruch 1, wobei die Entfernung (h) zwischen der Oberfläche von in dem Kollektor (4) enthaltenem Wasser oder organischen Lösungsmittel (4a) und der Oberseite des leitenden Materials (5) 5 bis 50 mm beträgt.

5. Verfahren nach Anspruch 1, wobei der Winkel (θ) zwischen den auf der Oberfläche von Wasser oder organischem Lösungsmittel (4a) im Kollektor (4) gesammelten Nanofasern und dem durch die rotierbare Walze (6) gezogenen unverstreckten Filament (Aggregat von Nanofasern) 0 bis 180° beträgt.

6. Verfahren nach Anspruch 1, wobei der Winkel (θ) zwischen den auf der Oberfläche von Wasser oder organischem Lösungsmittel (4a) im Kollektor (4) gesammelten Nanofasern und dem durch die rotierbare Walze (6) gezogenen unverstreckten Filament (Aggregat von Nanofasern) 10 bis 90° beträgt.

7. Verfahren nach Anspruch 1, wobei das verstreckte Filament (Garn) verdrillt wird, bevor es gewickelt wird.

8. Verfahren nach Anspruch 1, wobei der Durchmesser der Nanofasern weniger als 1000 nm beträgt.

9. Verfahren nach Anspruch 1, wobei die Polymerspinnlösung zusammengesetzt ist aus Polyesterharz, Nylonharz, Polysulfonharz, Polymilchsäure und einem Copolymer davon oder einer Mischung davon.

10. Verfahren nach Anspruch 1, wobei mehr als zwei Arten der Polymerspinnlösung auf der Oberfläche von Wasser oder organischem Lösungsmittel (4a) des Kollektors (4), der Wasser oder organisches Lösungsmittel (4a) enthält und das leitende Material (5) mit einer angelegten Hochspannung, versenkt in Wasser oder in organischem Lösungsmittel (4a), aufweist, durch jede der Düsen (2) versponnen werden.

## Revendications

1. Procédé de préparation d'un filament continu constitué d'une nanofibre,
dans lequel des nanofibres sont préparées en filant une solution de filage de polymère présente dans un réservoir principal (20) de solution de filage sur la surface d'eau ou de solvant organique (4a) d'un collecteur (4) qui contient de l'eau ou un solvant organique (4a) et qui comporte un matériau conducteur (5) sous tension électrique élevée, immergé dans l'eau ou le solvant organique (4a), à travers des buses (2) auxquelles est appliquée une tension électrique élevée, et dans lequel
les nanofibres filées sur la surface de l'eau ou du solvant organique (4a) sont pressées, étirées, séchées et enroulées en étant tirées par un rouleau rotatif (6) tournant à vitesse linéaire constante depuis un emplacement distant de plus d'1 cm de l'une des extrémités de l'emplacement de dépôt.

2. Procédé selon la revendication 1, dans lequel le matériau conducteur (5) est une plaque métallique ou une poudre métallique.

3. Procédé selon la revendication 1, dans lequel la distance (h) entre la surface de l'eau ou du solvant organique (4a) contenu dans le collecteur (4) et la surface supérieure du matériau conducteur (5) est de 0,01 à 200 mm.

4. Procédé selon la revendication 1, dans lequel la distance (h) entre la surface de l'eau ou du solvant organique (4a) contenu dans le collecteur (4) et la surface supérieure du matériau conducteur (5) est de 5 à 50 mm.

5. Procédé selon la revendication 1, dans lequel l'angle (θ) entre les nanofibres collectées sur la surface de l'eau ou du solvant organique (4a) présent dans le collecteur (4) et le filament non étiré (agrégat de nanofibres), tiré par le rouleau rotatif (6) est de 0° à 180°.

6. Procédé selon la revendication 1, dans lequel l'angle (θ) entre les nanofibres collectées sur la surface de l'eau ou du solvant organique (4a) présent dans le collecteur (4) et le filament non étiré (agrégat de nanofibres), tiré par le rouleau rotatif (6) est de 10° à 90°.

7. Procédé selon la revendication 1, dans lequel le filament étiré (fil) subit une torsion avant d'être enroulé.

8. Procédé selon la revendication 1, dans lequel le diamètre des nanofibres est inférieur à 1000 nm.

9. Procédé selon la revendication 1, dans lequel la solution de filage de polymère est composée de résine polyester, de résine de Nylon, de résine polysulfonique, d'acide polylactique et d'un copolymère de ceux-ci ou d'un mélange de ceux-ci.

10. Procédé selon la revendication 1, dans lequel plus de deux sortes de solutions de filage de polymère sont filées sur la surface de l'eau ou du solvant organique (4a) du collecteur (4) qui contient de l'eau ou un solvant organique (4a) et qui comporte un matériau conducteur (5) auquel est appliquée une tension électrique élevée, et qui est immergé dans l'eau ou le solvant organique (4a), à travers chacune des buses (2).
